# EUROPÄISCHE PATENTSCHRIFT

(11) **EP 3 650 176 B1**
(45) Veröffentlichungstag und Bekanntmachung des Hinweises auf die Patenterteilung: **24.12.2025**
(21) Anmeldenummer: 18204899.1
(22) Anmeldetag: 07.11.2018
(51) Int. Cl.: B25F 5/00, B25B 27/02

(54) **PRESSMASCHINE**
PRESSING MACHINE
MACHINE À PRESSER

(43) Veröffentlichungstag der Anmeldung: 13.05.2020
(73) Patentinhaber: Emerson Professional Tools AG, 4450 Sissach (CH)
(72) Erfinder: RUCH, Matthias, 79588 Efringen-Kirchen (DE); KREUZER, Rudolf, 5033 Buchs (CH)
(74) Vertreter: Mader, Joachim

(56) Entgegenhaltungen:
- EP-A2- 2 014 419
- EP-B1- 2 501 523
- DE-U1- 202006 001 889

## Beschreibung

### 1. Technisches Gebiet

Die vorliegende Erfindung betrifft eine Pressmaschine, insbesondere eine handgeführte Pressmaschine, für die plastische Verformung von bevorzugt rohrförmigen Werkstücken. Die Erfindung betrifft weiterhin ein Verfahren zum Betreiben einer handgeführten Pressmaschine. Insbesondere eignet sich die erfindungsgemäße Pressmaschine zum Verbinden von Rohren mit Pressfittings im Heizungs- und Sanitärinstallationsbereich durch Pressen.

### 2. Stand der Technik

Im Stand der Technik sind mehrere Verfahren zum Verbinden von rohrförmigen Werkstücken bekannt. Eine dieser Methoden setzt ein größeres Rohr über ein kleineres Rohr und verpresst beide miteinander. In anderen Methoden werden Rohre durch ein Verpressen von Pressfittings miteinander verbunden. Ein mögliches Gerät für ein einfaches Verpressen ist eine handgeführte Pressmaschine, insbesondere eine Rohrpressmaschine. Solche handgeführten Pressmaschinen verfügen über ein Presswerkzeug mit austauschbaren Backen, beispielsweise Backen zum Pressen, Crimpen oder zum Schneiden von Werkstücken. Bei Rohrpressmaschinen für Rohrverbindungen mithilfe eines Pressfittings, umgeben die Pressbacken den über dem Rohr angeordneten Pressfitting. Durch ein Schließen der Pressbacken werden der Pressfitting und das Rohr plastisch verformt und so dauerhaft miteinander verbunden.

Für gewöhnlich wird eine handgeführte Pressmaschine mit einem Gleichstromelektromotor betrieben. Zur Stromversorgung kann die Pressmaschine an ein Stromnetz oder einen Akkumulator angeschlossen sein. Zur Erzeugung der erforderlichen hohen Presskräfte, wird zwischen Elektromotor und Presswerkzeug üblicherweise eine elektrohydraulische oder elektromechanische Umwandlungseinrichtung angeordnet. Der Elektromotor erzeugt eine Drehbewegung, die durch ein mit dem Elektromotor verbundenes Getriebe reduziert wird. Die Abtriebswelle des Getriebes treibt wiederrum einen Exzenter einer Exzenterwelle an. Bei einer hydraulischen Umwandlungseinrichtung wird durch den angetriebenen Exzenter ein Kolben einer Kolbenpumpe hin-und-her bewegt und damit eine Hydraulikflüssigkeit in einen Zylinderraum geleitet. Durch die von der Kolbenpumpe geförderte Hydraulikflüssigkeit wird ein Arbeitskolben innerhalb des Zylinderraums mit Druck beaufschlagt und linear in Richtung des Presswerkzeugs bewegt. Mit dem Arbeitskolben verbundene Rollen betätigen dann das bevorzugt austauschbare Presswerkzeug, beispielsweise Pressbacken, und führen zu einem Schließen der Pressbacken. Beim Schließen der Pressbacken übertragen die Pressbacken eine Kraft auf die zu verpressenden Werkstücke und verpressen bzw. verbinden diese miteinander.

So ist aus der Druckschrift EP 2 501 523 B1 ein handgeführtes Pressgerät zum Verpressen eines Pressfittings in der Installationstechnik und zum Verpressen von Kabelschuhen bekannt. Zur Erzeugung der erforderlichen hohen Presskräfte ist das Presswerkzeug mit einer elektrohydraulischen Umwandlungseinrichtung verbunden. Als Antriebsmotor wird ein bürstenloser Elektromotor verwendet. Sobald die erforderliche Presskraft erreicht ist, öffnet ein rein mechanisches Überdruckventil und die Motordrehzahl steigt sprunghaft an. Dies wird von einer Steuerung des Pressgeräts erkannt und der Elektromotor nachfolgend abgeschaltet.

Bisher beaufschlagen die Pressmaschinen Werkstücke immer bis zu einer maximalen Presskraft der Pressmaschine. Jedoch sind einzelne Werkstücke aufgrund ihrer Material- oder Formeigenschaften bereits bei einem geringeren Pressdruck vollständig miteinander verpresst. In einem solchen Fall steigt bei einem weiteren Verpressen der Hydraulikdruck im Zylinderraum schnell an, da keine plastische Verformung am Werkstück, sondern nur noch eine elastische Verformung am Werkzeug auftritt. Die elastische Verformung bewirkt dabei keinerlei Weiterverpressung des Werkstücks, führt jedoch zu einem starken Verschleiß der Pressbacken und des Presswerkzeugs. Darüber hinaus wird unnötig elektrische Energie verbraucht und der Pressvorgang dauert unnötig länger.

Aus der Druckschrift EP 2 014 418 A2 ist eine Pressmaschine zum plastischen Verformen eines Werkstücks bekannt, bei dem eine Koppeleinrichtung einen Elektromotor des hydraulischen Antriebs mechanisch mit einem Druckentlastungsventil koppelt, so dass der Elektromotor bei einem Betrieb in einer der Arbeitsdrehrichtung entgegengesetzten Lösedrehrichtung das Druckentlastungsventil öffnet.

Der Erfindung liegt daher die Aufgabe zugrunde, eine handgeführte Pressmaschine bereitzustellen, die für unterschiedliche Pressvorgänge optimiert arbeitet und bei der der Verschleiß der Presswerkzeuge deutlich reduziert wird.

### 3. Zusammenfassung der Erfindung

Die oben genannten Probleme werden erfindungsgemäß durch eine Pressmaschine nach Anspruch 1 sowie einem Verfahren zum Betreiben einer Pressmaschine nach Anspruch 8 gelöst.

Insbesondere werden die oben genannten Probleme gelöst durch eine Pressmaschine zum plastischen Verformen eines Werkstücks, aufweisend einen Elektromotor, Pressbacken zum Aufbringen einer Presskraft auf ein Werkstück, eine hydraulische Kraftübertragungseinheit zum Übertragen der Kraft des Elektromotors auf die Pressbacken, aufweisend eine durch den in Arbeitsdrehrichtung drehenden Elektromotor angetriebene Kolbenpumpe und ein Druckentlastungsventil, und eine Koppeleinrichtung, die den Elektromotor mechanisch mit dem Druckentlastungsventil koppelt, so dass der Elektromotor bei einem Betrieb in einer der Arbeitsdrehrichtung entgegengesetzten Lösedrehrichtung das Druckentlastungsventil öffnet.

Die Koppeleinrichtung hat den Vorteil, dass bei einer Elektromotordrehung in Arbeitsrichtung, die Pressmaschine einen Pressvorgang wie gewohnt durchführt, während bei einer Elektromotordrehung in Löserichtung, das Druckentlastungsventil geöffnet wird. So kann durch eine einfache Umkehrung der Elektromotordrehung das Druckentlastungsventil programmgesteuert zu einem beliebigen Zeitpunkt geöffnet werden. Der Elektromotor ist somit auch das Stellmittel für das Druckentlastungsventil.

Das Öffnen des Druckentlastungsventils bewirkt ein Beenden des Pressvorgangs, so dass folglich der Zeitpunkt des Endes des Pressvorgangs von einer Steuerung bestimmt werden kann, insbesondere unabhängig vom Erreichen einer maximalen Presskraft. Im Unterschied zum Stand der Technik wird mit der erfindungsgemäßen Pressmaschine ein unnötiges Aufbringen einer maximalen Presskraft vermeiden. Dadurch tritt keine, oder nur minimale, elastische Verformung an den Pressbacken auf, was einen unnötigen Verschleiß der Pressmaschine insbesondere der Pressbacken vermeidet.

Darüber hinaus wird die Pressdauer verkürzt, was ein insgesamt schnelleres Arbeiten ermöglicht. Der maximale Pressdruck ist in der Regel recht hoch angesetzt, um ein sicheres Verpressen, d.h. Verbinden, der Werkstücke zu gewährleisten. Wird nur ein geringerer Pressdruck benötigt, wobei dennoch eine sichere Verpressung gewährleistet ist, so verkürzt sich auch die notwendige Pressdauer, was das Arbeiten mit der Pressmaschine effizienter gestaltet.

Durch eine Umkehrung der Elektromotordrehung von der Arbeitsdrehrichtung in die entgegengesetzte Lösedrehrichtung, und dem damit verbundenen Öffnen des Druckentlastungsventils, wird ein zusätzliches Ventil, wie z.B. ein Hochdruck-Hydraulik-Magnetventil, nicht benötigt. Dadurch wird der Aufbau der Pressmaschine einfacher und kostengünstiger, sowie ihr Gewicht reduziert.

Erfindungsgemäß weist die Pressmaschine eine Kupplung auf, die nur in Lösedrehrichtung des Elektromotors wirkt. Dadurch kann der Elektromotor wie gewohnt in seiner Arbeitsdrehrichtung arbeiten, um den Pressvorgang durchzuführen. Für den Pressvorgang sind daher keine strukturellen Veränderungen an der Pressmaschine notwendig. Das vereinfacht die Konstruktion und Herstellung der Rohpressmaschine. In Löserichtung ermöglicht die Kupplung eine Kraftübertragung vom Elektromotor auf das Druckentlastungsventil, um dieses motorisch und programmgesteuert zu öffnen.

Bevorzugt umfasst die Kupplung einen Freilauf und ist bevorzugt ein Freilauf-Kugellager. Damit wir auf konstruktiv einfache und zuverlässige Weise eine Kupplung realisiert, die nur in einer Drehrichtung, hier der Lösedrehrichtung, wirkt.

Erfindungsgemäß weist die Pressmaschine weiterhin eine vom Elektromotor über die Kupplung angetriebene Nocke auf, die das Druckentlastungsventil öffnen kann. Mittels einer Nocke kann die Drehbewegung des Elektromotors auf einfache Weise in eine bevorzugt lineare Bewegung zum Öffnen des Druckentlastungsventils umsetzen.

Erfindungsgemäß weist die Pressmaschine weiterhin einen Hebel des Druckentlastungsventils auf, auf den die Nocke einwirken kann. Mittels eines Hebels kann die Bewegung der Nocke auf konstruktiv einfache Weise auf das Druckentlastungsventil übertragen werden. Hierbei ist eine besonders raumsparende Ansteuerung des Druckentlastungsventils gegeben. Zudem kann mit dem Hebel die Kraft der Nocke zum Öffnen des Druckentlastungsventils vergrößert werden.

Bevorzugt weist die Pressmaschine weiterhin eine vom Elektromotor angetriebene Exzenterwelle mit einem Exzenter, zur Betätigung der Kolbenpumpe, auf. Die Kolbenpumpe kann mittels der Exzenterwelle auf besonders zuverlässige Weise betrieben werden. Bevorzugt ist um den Exzenter ein Kugellager angeordnet, so dass der Antrieb der Kolbenpumpe zudem sehr reibungsarm erfolgt.

Bevorzugt ist die Nocke über die Kupplung auf der Exzenterwelle gelagert und kann von dieser in Lösedrehrichtung angetrieben werden. Damit wird eine konstruktiv einfache Lösung zum Antrieb der Nocke einerseits und zum Antrieb der Kolbenpumpe andererseits, bereitgestellt.

Bevorzugt weist die Pressmaschine eine Steuerung zum Ansteuern des Elektromotors auf und weist mindestens einen Sensor zum Messen von mindestens einem Pressparameter auf, wobei die Steuerung eingerichtet ist, basierend auf dem mindestens einen Pressparameter, das Ende des Pressvorgangs zu erkennen und den Elektromotor in der, der Arbeitsdrehrichtung entgegengesetzten Lösedrehrichtung zu betreiben, um das Druckentlastungsventil zu öffnen. Die Verwendung der Steuerung und die mittels mindestens eines Sensors mindestens einem Pressparameter erkennt, hat den Vorteil, dass die Pressmaschine zur Verpressung nicht die maximale Presskraft aufwenden muss, sondern der Pressvorgang durch die Steuerung bei einem genau definierten Zustand bereits vorher beendet werden kann und dennoch eine sichere Verpressung gewährleistet ist. Somit wird einem frühzeitigen Verschleiß der Pressbacken, sowie Bauteilgruppen innerhalb der Pressmaschine entgegengewirkt. Durch die Steuerung wird über die Auswertung der Sensorwerte das Ende des Pressvorgangs erkannt, worauf der Elektromotor von der Steuerung in der, der Arbeitsdrehrichtung entgegengesetzten Lösedrehrichtung angesteuert wird, um die Pressbacken wieder zu öffnen und die Hydraulikflüssigkeit aus dem Arbeitskolben in den Ölbehälter ablaufen kann, damit sich die Pressmaschine wieder in ihre offene Anfangsposition zurückbewegt.

Bevorzugt erkennt die Steuerung das Ende des Pressvorgangs, wenn Abschaltkriterien erfüllt sind, wobei die Steuerung dann die Drehrichtung des Elektromotors von der Arbeitsdrehrichtung zur Lösedrehrichtung umkehrt. Die Erkennung von Abschaltkriterien, die entweder vor dem Pressvorgang in das System eingegeben wurden oder Abschaltkriterien, die durch Sensorik während oder kurz vor dem Pressvorgang erkannt werden, ermöglicht eine optimale Verpressung ohne die maximale mögliche Presskraft aufwenden zu müssen. Insbesondere kann durch bestimmte Abschaltkriterien erkannt werden, dass bei einer Fortsetzung des Pressvorgangs nur noch elastische Verformung an den Pressbacken auftritt. Die Beendigung des Pressvorgangs bevor unnötigerweise die maximale Presskraft aufgebracht wird, wirkt dem frühzeitigen Verschleiß der Pressbacken, sowie weiterer Bauteile der Pressmaschine entgegen. Ein anderes Abschaltkriterium kann beispielsweise das Erreichen eines einstellbaren Hydraulikdrucks sein, beispielsweise eines Hydraulikdrucks von 400 bar.

Bevorzugt umfasst der mindestens eine Sensor einen Hallsensor, welcher die Umdrehungen des Elektromotors erfasst und/oder einen Stromsensor, der den Versorgungsstrom des Elektromotors erfasst und/oder einen Drucksensor, der den hydraulischen Öldruck erfasst und/oder einen Kraftsensor, der eine für die Presskraft charakteristische mechanische Kraft erfasst und/oder einen Drehmomentsensor, der ein Drehmoment in der Kraftübertragungseinheit erfasst. Der mindestens eine Sensor ermöglicht dem Steuersystem der Pressmaschine verschiedene Pressparameter und/oder deren zeitlichen Verlauf zu erfassen. Diese Pressparameter werden von einem Steuersystem bzw. einer Steuerung ausgewertet, um das Erreichen von Abschaltkriterien zu ermitteln. Die Abschaltkriterien können unterschiedliche Pressparameterwerte sein, wie z.B. ein Mindestwert, ein Mindestdauer o.ä.. Basierend auf den Abschaltkriterien kann die Steuerung automatisch entscheiden, wann der aktuelle Pressvorgang beendet werden soll. Eine zusätzliche Interaktion eines Benutzers bezüglich des Beendens des Pressvorgangs ist nicht notwendig. Hat die Steuerung das Erreichen eines oder mehrerer Abschaltkriterien erkannt, so wird die Drehrichtung des Elektromotors von der Arbeitsdrehrichtung in die entgegengesetzte Lösedrehrichtung umgekehrt, wodurch der Pressvorgang beendet wird. Die Abschaltkriterien können mit Hilfe der Pressparameter flexibel festgelegt werden. Bei unterschiedlichen Pressmaschinen, unterschiedlichen zu verpressenden Materialien oder sich verändernden Erfahrungswerten, kann die Abschaltung so flexibel angepasst werden.

Die oben genannten Probleme werden auch gelöst durch ein Verfahren zum Betreiben einer Pressmaschine, aufweisend die folgenden Schritte:
Betreiben einer hydraulischen Kraftübertragungseinheit durch einen in einer Arbeitsdrehrichtung drehenden elektrischen Elektromotor;
Erkennen der Beendigung des Pressvorgangs durch eine Steuerung der Pressmaschine;
Nach Erkennen der Beendigung des Pressvorgangs, Umkehren der Drehrichtung des Elektromotors von der Arbeitsdrehrichtung zur Lösedrehrichtung; und
Öffnen eines Druckentlastungsventils der hydraulischen Kraftübertragungseinheit durch Drehen des Elektromotors in Lösedrehrichtung.

Durch das Erkennen der Beendigung des Pressvorgangs durch die Steuerung wird es ermöglicht, dass von der Pressmaschine lediglich die für das Werkstück benötigte Presskraft aufgebracht wird, um eine optimale Verpressung zu erreichen. Ein Pressvorgang, der die maximalen Presskraft der Pressmaschine erreicht, muss nicht durchgeführt werden. Damit entfällt auch der damit verbundene Verschleiß der Rohrpressmaschine und die zusätzliche Presszeit.

Nachdem die Steuerung das Ende des Pressvorgangs erkannt hat, veranlasst sie die Umkehrung der Motordrehrichtung von der Arbeitsdrehrichtung zur Lösedrehrichtung um durch Drehen des Elektromotors in Lösedrehrichtung das Druckentlastungsventil der hydraulischen Kraftübertragungseinheit zu öffnen und das Presswerkzeug wieder in seine offene Ausgangslage zurück zu bewegen. Mit dem vorliegenden Verfahren ist eine einfache, schnelle und optimale Verpressung des zu verpressenden Werkstücks gewährleistet, wobei die maximale Presskraft der Pressmaschine durch die frühzeitige Erkennung der Beendigung des Pressvorgangs in den meisten Fällen nicht aufgebracht werden muss, was zu größeren Wartungsintervallen, einem geringeren Verschleiß der Pressmaschine, kürzeren Verpresszeiten und einer längeren Akkulaufzeit führt.

Das Verfahren wird bevorzugt zum plastischen Verformen eines rohrförmigen Werkstücks beispielsweise eines Pressfittings einer Heizungs- oder Sanitärinstallation eingesetzt.

Bevorzugt werden durch das Öffnen des Druckentlastungsventils die hydraulische Kraftübertragungseinheit und die Pressbacken der Pressmaschine in ihre Endpositionen zurückgefahren.

Bevorzugt weist das Verfahren weiterhin den Schritt des Erkennens der Endposition der Kraftübertragungseinheit und des Abschaltens des Elektromotors durch die Steuerung auf.

Dadurch wird die Steuerung und Handhabung der Pressmaschine für den Benutzer weiter vereinfacht. Ein manuelles Abschalten des Elektromotors entfällt. Das automatische Abschalten spart Strom und gibt dem Benutzer, insbesondere in unübersichtlichen Einsatzgebieten, ein direktes Feedback über das Ende des Rückführungsprozesses der Pressmaschine in den offenen Zustand.

Bevorzugt wird die Beendigung des Pressvorgangs durch Erreichen von einem oder mehreren der folgenden Abschaltkriterien erkannt:
Anstieg des Versorgungstroms oder Erreichen eines vorgegebenen Versorgungsstroms des Elektromotors;
Anstieg der Presskraft oder Erreichen einer vorgegebenen maximalen Presskraft;
Anstieg des Drehmoments oder Erreichen eines vorgegebenen Drehmoments;
Erreichen einer maximalen Anzahl an Umdrehungen des Elektromotors;
Anstieg des hydraulischen Drucks oder Erreichen eines vorgegebenen maximalen hydraulischen Drucks;

Durch die Sensorik und die Steuerungselektronik kann ein Anstieg des Versorgungsstroms, der Presskraft, des Drehmoments sowie des hydraulischen Drucks ermittelt und berechnet und als Abschaltkriterium verwendet werden. Dadurch kann die Pressmaschine während des Pressvorgangs werkstoff- und werkzeugspezifisch einen Abschaltzeitpunkt bestimmen, um die Pressmaschine abzuschalten, ohne dass die maximale Presskraft der Pressmaschine aufgewendet wird. Dennoch wird eine optimale Verpressung des Werkstückes erreicht. Eine manuelle Bestimmung und/oder Eingabe von Maximalwerten zur Abschaltung seitens des Benutzers, basierend auf Werkstoff- und/oder Werkzeugkennwerten, kann dadurch entfallen. Ungeachtet dessen, ist es jedoch auch möglich, Maximalparameter des Versorgungsstroms, der Presskraft, des Drehmoments, des hydraulischen Drucks und/oder einer maximalen Anzahl an Umdrehungen des Elektromotors der Pressmaschine vorzugeben.

Bevorzugt weist das Verfahren weiterhin den Schritt auf, dass sich das Druckentlastungsventil der hydraulischen Kraftübertragungseinheit nach Erreichen deren Endposition wieder schließt. Dadurch kann direkt nach Beendigung eines Pressvorgangs ein weiterer Pressvorgang gestartet werden.

### 4. Kurze Beschreibung der Figuren

Im Folgenden werden bevorzugte Ausführungsformen der vorliegenden Erfindung anhand der beigefügten Figuren dargestellt. Dabei zeigt:
- Fig. 1: eine schematische Schnittansicht des Antriebsteils einer Ausführungsform einer Pressmaschine;
- Fig. 2a: eine schematische Seitenansicht von Teilen des Antriebsteils nach Fig. 1 mit einem Druckentlastungsventil und seiner Ansteuerung im geschlossenen Zustand; und
- Fig. 2b: Seitenansicht gemäß Fig. 2a mit einem Druckentlastungsventil und seiner Ansteuerung im geöffneten Zustand.

### 5. Detaillierte Beschreibung bevorzugter Ausführungsformen

Im Folgenden werden bevorzugte Ausführungsformen der vorliegenden Erfindung im Detail unter Bezugnahme auf die beigefügten Figuren beschrieben.

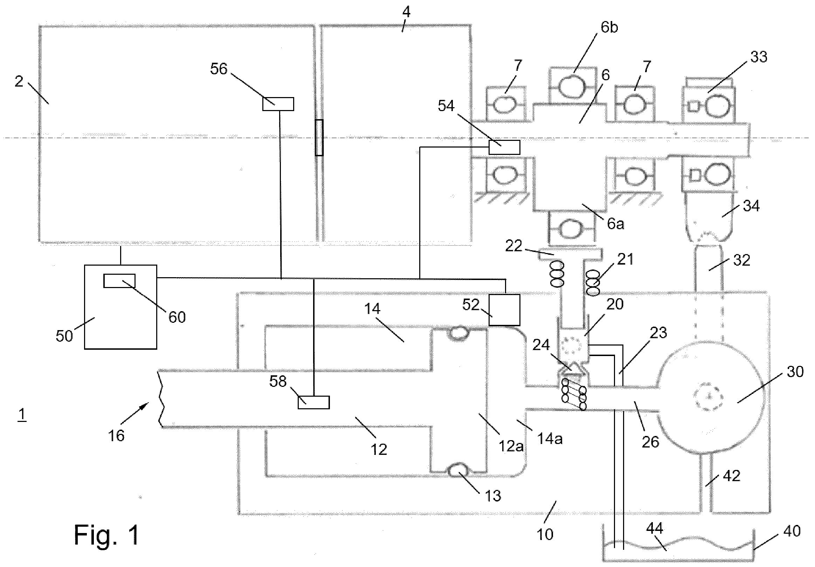

Fig. 1 zeigt den Antriebs- und Steuerteil einer bevorzugt handgeführten Pressmaschine 1, wie sie z.B. zum Verbinden von Rohren mittels Pressfittinge verwendet wird. Die handgeführte Pressmaschine 1 weist einen Elektromotor 2 auf, der in einer Ausführungsform ein Gleichstromelektromotor ist. Der Elektromotor 2 wird mit Strom aus einer Batterie bzw. einem Akkumulator, oder durch eine kabelgebundene Stromversorgung, oder einer Kombination davon angetrieben (nicht dargestellt). Der Elektromotor 2 ist abtriebsseitig mit einem Getriebe 4 verbunden, um seine Drehzahl auf eine für den Abnehmer, hier eine Kolbenpumpe 20, passende Drehzahl zu reduzieren. Der Elektromotor 2 und das Getriebe 4 können auch als eine zusammenhängende Elektromotor-Getriebeeinheit ausgestaltet sein. Weiterhin kann anstelle eines Elektromotors mit Getriebe ein Elektromotor mit bereits entsprechender Drehzahl und/oder entsprechendem Drehmoment verwendet werden.

Auf der Abtriebsseite des Getriebes 4 schließt sich eine Exzenterwelle 6 an die Ausgangswelle des Getriebes 4 an. Die Exzenterwelle 6 ist auf Kugellagern 7 drehbar gelagert. Die Exzenterwelle 6 umfasst einen Exzenter 6a der einen Kolben 22 der Kolbenpumpe 20 linear auf- und-ab bewegt. Zur Verminderung der Reibung ist der Exzenter 6a von einem Kugellager 6b umgeben, das die Exzenterkraft auf den Kolben 22 einleitet. Das Kugellager 6b vermeidet ein Gleiten der Exzenteroberfläche auf der Kolbenoberfläche und minimiert so die Reibung.

Der Kolben 22 der Kolbenpumpe 20 ist mit Hilfe einer Feder 21 in Richtung des Exzenters 6a vorgespannt. Wird der Exzenter 6a durch eine Drehung der Exzenterwelle 6 gedreht, so wird der Kolben 22 entgegen der Feder 21, gedrückt. Dadurch öffnet sich ein Rückschlagventil 24 an der Kolbenpumpe 20, und eine Hydraulikflüssigkeit 44 wird mittels der Kolbenpumpe 20 von einem Flüssigkeits-Reservoir 40 über eine Leitung 23 und eine Leitung 26 in einen Zylinderraum 14a oberhalb des Arbeitskolbens 12 der hydraulischen Kraftübertragungseinheit 10 gepumpt.

Bei weiterer Drehung der Exzenterwelle 6 wird der Exzenter 6a wieder vom Kolben 22 der Kolbenpumpe 20 weggedreht, so dass aufgrund der Rückstellkraft der Feder 22 sich der Kolben 22 in Richtung der Exzenterwelle 6 bewegt. Dabei schließt das Rückschlagventil 24 der Kolbenpumpe 20 und verhindert einen Rückfluss von Hydraulikflüssigkeit 44 aus dem Zylinderraum 14a.

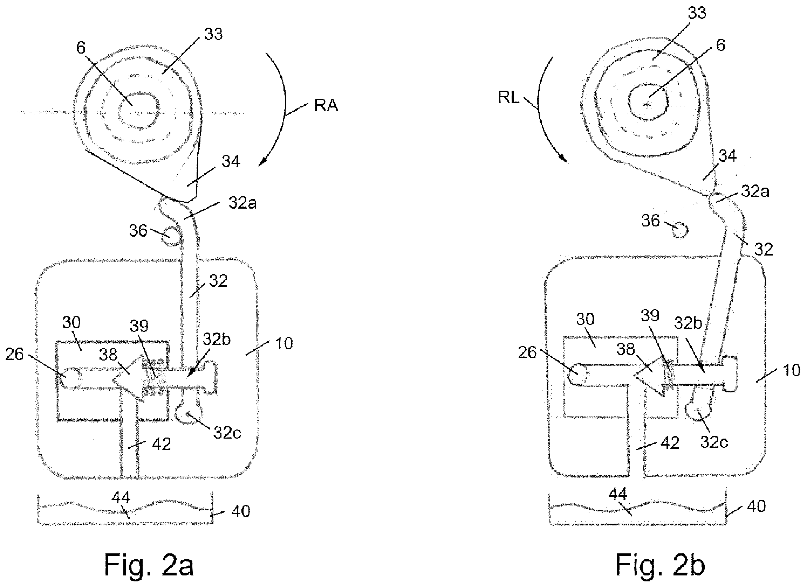

Bei einer kontinuierlichen Drehung der Exzenterwelle 6 in Arbeitsdrehrichtung RA (siehe Fig. 2a) pumpt die Kolbenpumpe 20 Hydraulikflüssigkeit 44 in den Zylinderraum 14a, wodurch sich dort der Druck erhöht und der Arbeitskolben 12a in Richtung der Werkzeugseite 16 der Pressmaschine 1, bzw. in Fig. 1 nach links, verschoben wird. Der Kopf 12a des im Zylinder 14 axial bewegbare Arbeitskolbens 12 kann eine Dichtung 13, vorzugsweise einem Dichtungsring, aufweisen.

An der Werkzeugseite 16 der Pressmaschine 1 kann ein Presswerkzeug (nicht dargestellt) befestigt werden, das von dem Arbeitskolben 12 betätigt wird. Durch die Kraft des Arbeitskolbens 12 bei seiner Bewegung in Richtung der Werkzeugseite 16, schließen sich die Pressbacken des Werkzeugs (nicht dargestellt) zum Verpressen eines Werkstücks. Die Pressbacken erzeugen dann eine Presskraft F die zu dem Hydraulikdruck P direkt proportional ist (*F* = *P x A* (*A* = Fläche des Arbeitskolbens)). Beim Schließen der Pressbacken um ein Werkstück oder einen Pressfitting wird eine Gegenkraft erzeugt und der Hydraulikdruck im Zylinderraum 14a erhöht sich. Durch den zunehmenden Hydraulikdruck und der daraus resultierenden Kraft zwischen den Pressbacken wird das Werkstück bzw. der Pressfitting plastisch verformt.

Der Pressvorgang wird durch eine elektronische Steuerung 60 gesteuert, welche die Signale mindestens eines Sensors 52 - 60 auswertet. Die Sensoren 52 - 60 messen Prozessparameter und die Steuerung 60 ist eingerichtet basierend auf mindestens einem Prozessparameter das Ende des Pressvorganges zu erkennen.

In einer Ausführungsform kann ein Drucksensor 52 an der hydraulischen Kraftübertragungseinheit 10 den Hydraulikdruck im Zylinderraum 14a des Zylinders 14 (Druckseite) während eines Pressvorgangs bestimmen und seine Messdaten an die Steuerung 50 übermitteln. Der Drucksensor 52 kann als ein analoger oder digitaler Drucksensor 52 ausgebildet sein. Bei einem analogen Drucksensor 52 kann zusätzlich ein A/D-Wandler vorgesehen sein, der die gemessenen, analogen Signale in digitale Signale wandelt.

Weiterhin kann ein Drehmomentsensor 54 vorgesehen sein, der ein Drehmoment in der Kraftübertragungseinrichtung 10 misst. Hierzu könnte beispielsweise ein Dehnmesstreifen an der Exzenterwelle 6 angeordnet sein.

Weiterhin kann ein Umdrehungssensor 56 vorgesehen sein, der die Umdrehungen des Elektromotors 2 erfasst. Der Umdrehungssensor 56 kann bevorzugt ein Hallsensor oder ein optischer Sensor zu Erfassung der Umdrehungen des Elektromotors 2 sein.

Ebenfalls kann ein Stromsensor 60 vorgesehen sein, der den Versorgungsstrom des Elektromotors 2 erfasst. Der Stromsensor 60 kann bevorzugt in die Steuerung 50 integriert sein.

Weiterhin kann ein Kraftsensor 58 vorgesehen sein, der eine für die Presskraft charakteristische mechanische Kraft erfasst. Hierzu könnte bevorzugt eine Kraftmessdose in den Kolben 12 integriert werden.

Die Sensoren 52-60 können einzeln oder in unterschiedlichen Kombinationen verwendet werden und liefern alle ihre Messwerte an die Steuerung 50, welche die Messwerte auswertet, um daraus insbesondere zu ermitteln, ob das Ende des Pressvorgangs erreicht ist. Hierzu kann die Steuerung ein oder mehrere der folgenden Abschaltkriterien verwenden:
- den Anstieg des Versorgungstroms oder Erreichen eines vorgegebenen Versorgungsstroms des Elektromotors 2, insbesondere gemessen durch den Stromsensor 60;
- den Anstieg der Presskraft oder Erreichen einer vorgegebenen maximalen Presskraft, insbesondere gemessen durch den Kraftsensor 58;
- den Anstieg des Drehmoments oder Erreichen eines vorgegebenen Drehmoments, insbesondere gemessen durch den Drehmomentsensor 54;
- das Erreichen einer maximalen Anzahl an Umdrehungen des Elektromotors, insbesondere gemessen durch den Umdrehungssensor 56;
- den Anstieg des hydraulischen Drucks oder Erreichen eines vorgegebenen maximalen hydraulischen Drucks, insbesondere gemessen durch den Drucksensor 52;

In Abhängigkeit der Auswertungsergebnisse, steuert die Steuerung 50 dann den Elektromotor 2 an. Dieser kann insbesondere stillstehen, sich in Arbeitsdrehrichtung RA drehen, um die Kolbenpumpe 20 zu betreiben, oder er kann sich in Lösedrehrichtung RL drehen, um ein Druckentlastungsventil 30 motorisch zu öffnen. Wird das Druckentlastungsventil 30 geöffnet, wird der Hydraulikdruck im Zylinderraum 14a abgebaut, und die Hydraulikflüssigkeit kann aus dem Zylinderraum über die Leitung 42 in das Reservoir 40 zurückfließen. Dabei bewegt sich der Kolben 12 in seine Ausgangsstellung zurück, bei der die Backen des Presswerkzeugs (nicht dargestellt) geöffnet sind.

In den Figuren 1, 2a und 2b ist eine bevorzugte Ausführungsform eines Druckentlastungsventils 30 dargestellt. Das Druckentlastungsventil 30 wird über eine Nocke 34 angesteuert, die über eine Kupplung 33 auf der Exzenterwelle 6 angeordnet ist. Die Kupplung 33 ist bevorzugt eine Freilaufkupplung, die die Drehbewegung der Exzenterwelle 6 bei Lösedrehrichtung RL des Elektromotors 2 auf die Nocke 34 überträgt, aber bei einer entgegengesetzten Drehrichtung RA des Elektromotors 2 und der Exzenterwelle 6 frei dreht und die Nocke 34 nicht antreibt. Bevorzugt ist die Kupplung 33 als Kugellager mit Freilauf ausgebildet. Freilauf und Lagerung der Nocke können jedoch auch als separate Bauteile realisiert werden. Die Kupplung 33 kann auch als Rutschkupplung o.ä. ausgebildet werden, die dann zusammen mit der Nocke 34 und der nachfolgenden Mechanik insgesamt als Freilauf wirkt.

In der dargestellten Ausführungsform betätigt die Nocke 34 bei Drehung in Löserichtung RL einen Hebel 32, indem sie seinen Kopf 32a wegbewegt und damit den Hebel 32 verschwenkt, wie in Fig. 2b dargestellt. Fig. 2b zeigt das Druckentlastungsventil 30 in seiner von der Nocke 34 und dem Hebel 32 betätigten offenen Stellung in Lösedrehrichtung RL der Exzenterwelle 6. Fig. 2a zeigt das Druckentlastungsventil 30 in seiner geschlossenen Stellung in Arbeitsdrehrichtung RA der Exzenterwelle 6.

Der Hebel 32 ist weiterhin an einem Verbindungspunkt 32b bewegbar mit einem Ventilverschluss 38 des Druckentlastungsventils 30 verbunden. Der Ventilverschluss 38 regelt einen Abfluss von Hydraulikflüssigkeit 44 aus dem Zylinderraum 14a zum Reservoir 40 über die Leitungen 42 und 26. Der Ventilverschluss 38 wird mittels einer Feder 39 in seine geschlossene Position vorgespannt. Der Hebel 32 dabei durch die Kraft der Feder 39 gegen einen Stopper 36 gedrückt. Insgesamt kann sich der Hebel 32 um einen Drehpunkt 32c an seinem dem Hebelkopf 32a gegenüberliegendem Ende verschwenken. Im Drehpunkt 32c ist der Hebel an der hydraulischen Kraftübertragungseinheit 10 drehbar befestigt.

Wird der Elektromotor 2 von der Steuerung 50 bei Beendigung des Pressvorgangs in Lösedrehrichtung RL angesteuert, wie in Fig. 2b dargestellt, so stößt die Nocke 34 bei ihrer Drehbewegung an den Kopf 32a des Hebels 32. Dies geschieht je nach Ausgangsstellung der Nocke 34 nach maximal einer Umdrehung der Exzenterwelle 6. Bei weiterer Drehung der Exzenterwelle 6 und damit der Nocke 34 in Lösedrehrichtung RL, bewegt die Nocke 34 den Hebel 32 entgegen seiner Vorspannung, in Fig. 2b nach rechts, wodurch der Hebel 32 den Ventilverschluss 38 in seine offene Stellung verschiebt und damit das Druckentlastungsventil 30 motorisch öffnet. Dadurch kann die unter Druck stehende Hydraulikflüssigkeit 44 vom Zylinderraums 14a zurück in das Reservoir 40 fließen.

Für den Fall, dass ein einmaliges Öffnen des Druckentlastungsventils 30 nicht ausreicht, um den Arbeitskolben 12 in seine Ausgangsstellung zurückzufahren, kann durch weitere Umdrehungen des Elektromotors 2 und der Exzenterwelle 6 in Lösedrehrichtung RL weitere Hydraulikflüssigkeit 44 aus dem Zylinderraum 14a in das Reservoir 40 abfließen. Durch eine geeignete Ansteuerung des Elektromotors 2 durch die Steuerung 50 kann die Exzenterwelle 6 auch in einer Stellung angehalten werden, in der das Druckentlastungsventil 30 geöffnet ist. Damit wird ein schnelleres Zurückfahren des Arbeitskolbens 12 und eine weitere Zeit- und Energieersparnis erzielt.

Das Erreichen der Ausgangsposition des Arbeitskolbens 12 bzw. das Entleeren des Hydraulikdrucks im ersten Bereich 14a des Zylinderraums 14 kann mittels des Drucksensors 52 gemessen werden und an die Steuerung 50 weitergeleitet werden. Die Steuerung 50 kann daraufhin veranlassen, dass der Elektromotor 2 vollständig gestoppt wird. Die Pressmaschine 1 befindet sich dann wieder in ihrem offenen Ausgangszustand und kann unmittelbar für einen weiteren Pressvorgang verwendet werden.

Insbesondere beim Verpressen von weichen Werkstücken, wie Kupfer oder Kunststofffittings, ist es vorteilhaft, den Pressvorgang vor dem Erreichen einer maximalen Presskraft der Pressmaschine 1 zu beenden. Dennoch kann ein Überdruckventil kann vorhanden sein, um die Pressmaschine 1 vor einem ungewollten Überdruck, z.B. bei einem Maximaldruck im Bereich von 170 bar, zu schützen. Das Druckentlastungsventil 30 kann zudem so ausgebildet sein, dass es neben der motorischen Öffnung auch als gewöhnliches Überdruckventil agiert. Hierzu ist die insbesondere die Kraft der Feder 39 gemäß dem gewünschten Öffnungsdruck auszuwählen.

### Bezugszeichenliste

- 1: Pressmaschine
- 2: Elektromotor
- 4: Getriebe
- 6: Exzenterwelle
- 6a: Exzenter
- 6b: Kugellager
- 7: Lagerung
- 10: hydraulische Kraftübertragungseinheit
- 12: Arbeitskolben
- 12a: Kopf des Arbeitskolbens
- 13: Dichtung
- 14: Zylinder
- 14a: Zylinderraum
- 16: Werkzeugseite
- 20: Kolbenpumpe
- 21: Feder
- 22: Kolben
- 23: Leitung
- 24: Ventilverschluss
- 26: Leitung
- 30: Druckentlastungsventil
- 32: Hebel
- 32a: Hebelkopf
- 32b: Verbindungspunkt
- 32c: Drehpunkt
- 33: Kupplung, Freilauf-Kugellager
- 34: Nocke
- 36: Stopper
- 38: Ventilverschluss
- 39: Feder
- 40: Reservoir
- 42: Leitung
- 44: Hydraulikflüssigkeit
- 50: Steuerung
- 52: Drucksensor
- RA: Arbeitsdrehrichtung
- RL: Lösedrehrichtung

## Patentansprüche

1. Eine Pressmaschine (1) zum plastischen Verformen eines Werkstücks, aufweisend:
a. einen Elektromotor (2);
b. Pressbacken zum Aufbringen einer Presskraft auf ein Werkstück;
c. eine hydraulische Kraftübertragungseinheit (10) zum Übertragen der Kraft des Elektromotors (2) auf die Pressbacken, aufweisend eine durch den in Arbeitsdrehrichtung (RA) drehenden Elektromotor (2) angetriebene Kolbenpumpe (20) und ein Druckentlastungsventil (30);
d. eine Koppeleinrichtung (32, 33, 34), die den Elektromotor (2) mechanisch mit dem Druckentlastungsventil (30) koppelt, so dass der Elektromotor (2) bei einem Betrieb in einer der Arbeitsdrehrichtung (RA) entgegengesetzten Lösedrehrichtung (RL) das Druckentlastungsventil (30) öffnet; **gekennzeichnet durch**
e. eine vom Elektromotor (2) über eine Kupplung (33) angetriebene Nocke (34), wobei die Kupplung (33) nur in Lösedrehrichtung (RL) des Elektromotors (2) wirkt; und
f. einen Hebel (32) des Druckentlastungsventils (30), auf den die Nocke (34) einwirkt.

2. Die Pressmaschine gemäß Anspruch 1, wobei die Kupplung (33) einen Freilauf umfasst und bevorzugt ein Freilauf-Kugellager ist.

3. Die Pressmaschine gemäß einem der Ansprüche 1 oder 2, weiterhin aufweisend eine vom Elektromotor (2) angetriebene Exzenterwelle (6) mit einem Exzenter (6a) zur Betätigung der Kolbenpumpe (20).

4. Die Pressmaschine gemäß Anspruch 3 wobei die Nocke (34) über die Kupplung (33) auf der Exzenterwelle (6) gelagert und von dieser in Lösedrehrichtung (RL) angetrieben ist.

5. Die Pressmaschine gemäß einem der Ansprüche 1 - 4, weiterhin aufweisend eine Steuerung (50) zur Ansteuerung des Elektromotors (2) und mindestens einen Sensor (52-60) zum Messen von mindestens einem Pressparameter, wobei die Steuerung (50) eingerichtet ist, basierend auf dem mindestens einen Pressparameter das Ende des Pressvorgangs zu erkennen und den Elektromotor (2) in der, der Arbeitsdrehrichtung (RA) entgegengesetzten Lösedrehrichtung (RL) zu betreiben, um das Druckentlastungsventil (30) zu öffnen.

6. Die Pressmaschine gemäß Anspruch 5, wobei die Steuerung (50) das Ende des Pressvorgangs erkennt, wenn Abschaltkriterien erfüllt sind, wobei die Steuerung (50) dann die Drehrichtung des Elektromotors (2) von der Arbeitsdrehrichtung (RA) zur Lösedrehrichtung (RL) umkehrt.

7. Die Pressmaschine gemäß einem der Ansprüche 5 oder 6, wobei der mindestens einen Sensor (52-60) umfasst:
a. einen Sensor (56), welcher die Umdrehungen des Elektromotors (2) erfasst; und/oder
b. einen Stromsensor (60), der den Versorgungsstrom des Elektromotors (2) erfasst; und/oder
c. einen Drucksensor (52), der den hydraulischen Öldruck erfasst; und/oder
d. einen Kraftsensor (58), der eine für die Presskraft charakteristische mechanische Kraft erfasst; und/oder
e. einen Drehmomentsensor (54), der ein Drehmoment in der Kraftübertragungseinheit (10) erfasst.

8. Ein Verfahren zum Betreiben einer Pressmaschine (1), wobei das Verfahren die folgenden Schritte aufweist:
a. Betreiben einer hydraulischen Kraftübertragungseinheit (10) durch einen in einer Arbeitsdrehrichtung (RA) drehenden Elektromotor (2);
b. Erkennen der Beendigung des Pressvorgangs durch eine Steuerung (50) der Pressmaschine (1);
**gekennzeichnet durch** die folgenden Schritte:
c. Nach Erkennen der Beendigung des Pressvorgangs, Umkehren der Drehrichtung des Elektromotors (2) von der Arbeitsdrehrichtung (RA) zur Lösedrehrichtung (RL);
d. Drehen einer vom Elektromotor (2) über eine Kupplung (33) angetriebene Nocke (34), wobei die Kupplung (33) nur in Lösedrehrichtung (RL) des Elektromotors (2) wirkt;
e. Betätigen eines Hebels (32) des Druckentlastungsventils (30) durch die Nocke (34); und dabei
f. Öffnen eines Druckentlastungsventils (30) der hydraulischen Kraftübertragungseinheit (10) durch Drehen des Elektromotors (2) in Lösedrehrichtung (RL).

9. Das Verfahren gemäß Anspruch 8, wobei durch das Öffnen des Druckentlastungsventils (30) die hydraulische Kraftübertragungseinheit (10) und Pressbacken der Pressmaschine (1) in ihre Endpositionen zurückfahren.

10. Das Verfahren gemäß einem der Ansprüche 8 oder 9, weiterhin aufweisend den Schritt des Erkennens der Endposition der Kraftübertragungseinheit (10) und des Abschaltens des Elektromotors (2) durch die Steuerung (10).

11. Das Verfahren gemäß einem der Ansprüche 8 - 10, wobei die Beendigung des Pressvorgangs erkannt wird, durch Erreichen von einem oder mehreren der folgenden Abschaltkriterien:
a. Anstieg des Versorgungstroms oder Erreichen eines vorgegebenen Versorgungsstroms des Elektromotors (2);
b. Anstieg der Presskraft oder Erreichen einer vorgegebenen maximalen Presskraft;
c. Anstieg des Drehmoments oder Erreichen eines vorgegebenen Drehmoments;
d. Erreichen einer maximalen Anzahl an Umdrehungen des Elektromotors (2);
e. Anstieg des hydraulischen Drucks oder Erreichen eines vorgegebenen maximalen hydraulischen Drucks.

12. Das Verfahren gemäß einem der Ansprüche 8 - 11, wobei sich das Druckentlastungsventil (30) der hydraulischen Kraftübertragungseinheit (10) nach Erreichen deren Endposition wieder schließt.

## Claims

1. A press machine (1) for plastically deforming a workpiece, comprising:
a. an electric motor (2);
b. press jaws for applying a pressing force to a workpiece;
c. a hydraulic force transmission unit (10) for transmitting the force of the electric motor (2) to the press jaws, comprising a piston pump (20) driven by the electric motor (2) rotating in the working rotational direction (RA) and a pressure relief valve (30);
d. a coupling device (32, 33, 34) which mechanically couples the electric motor (2) to the pressure relief valve (30), so that the electric motor (2) opens the pressure relief valve (30) during operation in a release rotational direction (RL) opposite to the working rotational direction (RA); **characterized by**
e. a cam (34) driven by the electric motor (2) via a clutch (33), wherein the clutch (33) acts only in the release rotational direction (RL) of the electric motor (2); and
f. a lever (32) of the pressure relief valve (30) on which the cam (34) acts.

2. The press machine according to claim 1, wherein the clutch (33) comprises a freewheel and is preferably a freewheel ball bearing.

3. The press machine according to one of claims 1 or 2, further comprising an eccentric shaft (6) driven by the electric motor (2) with an eccentric (6a) for actuating the piston pump (20).

4. The press machine according to claim 3, wherein the cam (34) is mounted on the eccentric shaft (6) via the clutch (33) and is driven by the latter in the release rotational direction (RL).

5. The press machine according to one of claims 1-4, further comprising a controller (50) for controlling the electric motor (2) and at least one sensor (52-60) for measuring at least one pressing parameter, wherein the controller (50) is configured to detect the end of the pressing process based on the at least one pressing parameter and to operate the electric motor (2) in the release rotational direction (RL) opposite to the working rotational direction (RA) in order to open the pressure relief valve (30).

6. The press machine according to claim 5, wherein the controller (50) detects the end of the pressing process if switch-off criteria are met, wherein the controller (50) then reverses the rotational direction of the electric motor (2) from the working rotational direction (RA) to the release rotational direction (RL).

7. The press machine according to one of claims 5 or 6, wherein the at least one sensor (52-60) comprises:
a. a sensor (56) which detects the revolutions of the electric motor (2); and/or
b. a current sensor (60) which detects the supply current of the electric motor (2); and/or
c. a pressure sensor (52) which detects the hydraulic oil pressure; and/or
d. a force sensor (58) which detects a mechanical force characteristic of the pressing force; and/or
e. a torque sensor (54) which detects a torque in the force transmission unit (10).

8. A method for operating a press machine (1), wherein the method comprises the following steps:
a. operating a hydraulic force transmission unit (10) by an electric motor (2) rotating in a working rotational direction (RA);
b. detecting the end of the pressing process by a controller (50) of the press machine (1);
**characterized by** the following steps:
c. after detecting the end of the pressing process, reversing the rotational direction of the electric motor (2) from the working rotational direction (RA) to the release rotational direction (RL);
d. rotating a cam (34) driven by the electric motor (2) via a clutch (33), wherein the clutch (33) acts only in the release rotational direction (RL) of the electric motor (2);
e. operating a lever (32) of the pressure relief valve (30) by the cam (34); and thereby
f. opening a pressure relief valve (30) of the hydraulic force transmission unit (10) by rotating the electric motor (2) in the release rotational direction (RL).

9. The method according to claim 8, wherein the hydraulic force transmission unit (10) and press jaws of the press machine (1) move back into their end positions by opening the pressure relief valve (30).

10. The method according to one of claims 8 or 9, further comprising the step of detecting the end position of the force transmission unit (10) and switching off the electric motor (2) by the controller (10).

11. The method according to one of claims 8-10, wherein the end of the pressing process is detected by reaching one or more of the following switch-off criteria:
a. increase in the supply current or reaching a predetermined supply current of the electric motor (2);
b. increase in the pressing force or reaching a predetermined maximum pressing force;
c. increase in the torque or reaching a predetermined torque;
d. reaching a maximum number of revolutions of the electric motor (2);
e. increase in the hydraulic pressure or reaching a predetermined maximum hydraulic pressure.

12. The method according to one of claims 8-11, wherein the pressure relief valve (30) of the hydraulic force transmission unit (10) closes again after reaching its end position.

## Revendications

1. Machine à presser (1) pour la déformation plastique d'une pièce, comprenant :
a. un moteur électrique (2) ;
b. des mors de pressage pour appliquer une force de compression sur une pièce ;
c. une unité hydraulique de transmission de force (10) pour transmettre la force du moteur électrique aux mors de pressage, comportant une pompe à piston (20) entraînée par le moteur électrique (2) tournant dans le sens de rotation de serrage (RA) et une soupape de décharge (30) ;
d. un dispositif d'accouplement (32, 33, 34), qui accouple mécaniquement le moteur électrique (2) à la soupape de décharge (30) de façon que le moteur électrique (2), lorsqu'il fonctionne dans un sens de rotation de desserrage (RL) opposé au sens de rotation de serrage (RA), ouvre la soupape de décharge (30) ;
**caractérisée par**
e. une came (34) entraînée par le moteur électrique (2) par l'intermédiaire d'un embrayage (33), l'embrayage (33) n'agissant que dans le sens de rotation de desserrage (RL) du moteur électrique (2) ; et
f. un levier (32) de la soupape de décharge (30), sur lequel agit la came (34).

2. Machine à presser selon la revendication 1, dans laquelle l'accouplement (33) comporte une roue libre et est de préférence un roulement à billes à roue libre.

3. Machine à presser selon l'une des revendications 1 ou 2, comportant en outre un arbre excentrique (6) entraîné par le moteur électrique (2), avec un excentrique (6a) pour actionner la pompe à piston (20).

4. Machine à presser selon la revendication 3, dans laquelle la came (34) est logée par l'intermédiaire de l'accouplement (33) sur l'arbre excentrique (6) et est entraînée par ce dernier dans le sens de rotation de desserrage (RL).

5. Machine à presser selon l'une des revendications 1 à 4, comprenant en outre une commande (50) pour commander le moteur électrique (2) et au moins un capteur (52-60) pour mesurer au moins un paramètre de pressage, la commande (50) étant conçue pour détecter la fin de l'opération de pressage en se fondant sur l'au moins un paramètre de pressage, et pour faire fonctionner le moteur électrique (2) dans le sens de rotation de desserrage (RL) opposé au sens de serrage (RA), pour ouvrir la soupape de décharge (30).

6. Machine à presser selon la revendication 5, dans laquelle la commande (50) reconnaît la fin de l'opération de pressage quand des critères d'arrêt sont satisfaits, la commande (50) inversant ensuite le sens de rotation du moteur électrique (2), du sens de rotation de serrage (RA) au sens de rotation de desserrage (RL).

7. Machine à presser selon l'une des revendications 5 ou 6, dans laquelle l'au moins un capteur (52-60) comprend :
a. un capteur (56) qui mesure le nombre de tours du moteur électrique (2) ;
b. un capteur de courant (60) qui mesure le courant d'alimentation du moteur électrique (2) ; et/ou
c. un capteur de pression (52) qui mesure la pression d'huile hydraulique ; et/ou
d. un capteur de force (58) qui mesure une force mécanique caractéristique de la force de compression ; et/ou
e. un capteur de couple (54) qui mesure un couple dans l'unité de transmission de force (10).

8. Procédé de mise en œuvre d'une machine à presser (1), le procédé comprenant les étapes suivantes :
a. mise en œuvre d'une unité de transmission de force hydraulique (10) par un moteur électrique (2) tournant dans un sens de rotation de serrage (RA) ;
b. reconnaissance de la fin de l'opération de pressage par une commande (50) de la machine à presser (1) ;
**caractérisé par** les étapes suivantes :
c. après reconnaissance de la fin de l'opération de pressage, inversion du sens de rotation du moteur électrique (2), du sens de rotation de serrage (RA) au sens de rotation de desserrage (RL) ;
d. rotation d'une came (34) entraînée par le moteur électrique (2) par l'intermédiaire d'un accouplement (33), l'accouplement (33) n'agissant que dans le sens de rotation de desserrage (RL) du moteur électrique (2) ;
e. manœuvre d'un levier (32) de la soupape de décharge (30) par la came (34) ; et, de ce fait,
f. ouverture d'une soupape de décharge (30) de l'unité de transmission de force hydraulique (10) par rotation du moteur électrique (2) dans le sens de rotation de desserrage (RL).

9. Procédé selon la revendication 8, dans lequel l'unité de transmission de force hydraulique (10) et les mors de pressage de la machine à presser (1) sont ramenés à leurs positions finales par l'ouverture de la soupape de décharge (30).

10. Procédé selon l'une des revendications 8 ou 9, comprenant en outre l'étape de détection de la position finale de l'unité de transmission de force (10) et d'arrêt du moteur électrique (2) par la commande (10).

11. Procédé selon l'une des revendications 8 à 10, dans lequel la fin de l'opération de pressage est détectée quand sont atteints un ou plusieurs des critères d'arrêt suivants :
a. augmentation du courant d'alimentation ou atteinte d'un courant d'alimentation prédéfini du moteur électrique (2) ;
b. augmentation de la force de compression ou atteinte d'une force de compression maximale prédéfinie ;
c. augmentation du couple ou atteinte d'un couple prédéfini ;
d. atteinte d'un nombre maximal de tours du moteur électrique (2) ;
e. augmentation de la pression hydraulique ou atteinte d'une pression hydraulique maximale prédéfinie.

12. Procédé selon l'une des revendications 8 à 11, dans lequel la soupape de décharge (30) de l'unité de transmission de force hydraulique (10) va se fermer de nouveau après atteinte de sa position finale.
